# FASCICULE DE BREVET EUROPEEN

(11) **EP 1 759 471 B1**
(45) Date de publication et mention de la délivrance du brevet: **07.09.2011**
(21) Numéro de dépôt: 05746896.9
(22) Date de dépôt: 29.04.2005
(51) Int. Cl.: H04B 7/155

(54) **REPETEUR TERRESTRE A REDISTRIBUTION DE CODES PSEUDO-ALEATOIRES SUR DES PORTEUSES DE FREQUENCES DIFFERENTES**
TERRESTRISCHER ZWISCHENVERSTÄRKER MIT PSEUDOZUFALLSCODE-UMVERTEILUNG AUF VERSCHIEDENEN TRÄGERFREQUENZEN
TERRESTRIAL REPEATER WITH PSEUDO-RANDOM CODE REDISTRIBUTION ON DIFFERENT CARRIER FREQUENCIES

(30) Priorité: 14.06.2004 FR 0451172
(43) Date de publication de la demande: 07.03.2007
(73) Titulaire: Alcatel Lucent, 75008 Paris (FR)
(72) Inventeur: FRANCON, Michel-Guy, F-31200 TOULOUSE (FR); VINCENT, Paul, F-31830 PLAISANCE DU TOUCH (FR); CHUBERRE, Nicolas, F-31820 PIBRAC (FR)
(74) Mandataire: Hedarchet, Stéphane
(86) Numéro de dépôt international: PCT/FR2005/050289
(87) Numéro de publication internationale: WO 2006/000720

(56) Documents cités:
- WO-A-03/065617
- US-B1- 6 728 005
- US-B1- 6 728 523

## Description

L'invention concerne le domaine des réseaux de communications hybrides, et notamment ceux comportant une interface radio à accès multiple par répartition de codes ou CDMA (pour « Code Division Multiple Access »).

On entend ici par « réseau de communications hybride » (ou réseau hybride) un réseau de communications par satellites, utilisant par exemple une interface radio de type CDMA, comportant un ou plusieurs répéteurs terrestres, dont certains constituent éventuellement des stations de base d'un réseau radio cellulaire, par exemple de type GSM/GPRS ou UMTS. Un tel réseau hybride est par exemple un réseau de type SDMB (pour « Satellite Digital Multimedia Broadcast »).

Comme le sait l'homme de l'art, dans un réseau de type CDMA les données à transmettre sont tout d'abord encodées au moyen de séquences de codes pseudo-aléatoires (comme par exemple les codes de Walsh) orthogonaux entre eux et associés chacun à un canal de trafic ou de signalisation (canal de transmission physique) descendant (c'est-à-dire du réseau vers les terminaux utilisateurs). Ces codes pseudo-aléatoires sont également appelés codes de canalisation. Puis, les données encodées sont utilisées pour moduler des porteuses qui font l'objet, avant d'être transmises, d'un étalement de spectre au moyen de codes dits de « scrambling » (comme par exemple les codes de Gold) associés chacun à une séquence de codes pseudo-aléatoires, et également appelés codes d'étalement. Des jeux de codes de canalisation associés à des codes d'étalement différents ne sont plus orthogonaux entre eux.

En théorie, c'est-à-dire en présence d'une propagation mono-trajet (et plus précisément d'un canal de propagation mono-trajet) des porteuses modulées contenant les signaux encodés, et pour chaque code d'étalement, il n'y a pas d'interférence entre codes de canalisation tant que le nombre de canaux de communication différents (de trafic et de signalisation) utilisés n'excède pas le nombre de codes de canalisation utilisables. Ce dernier nombre est limité par le facteur d'étalement. Avec un facteur d'étalement L, le nombre maximal de codes de canalisation utilisables pour chaque code d'étalement est égal à L. Par conséquent, en présence de mono-trajets, chaque code d'étalement peut supporter L codes de canalisation sans interférences.

Cependant, dans la pratique la propagation en milieu dense, comme par exemple en milieu urbain, ou à l'intérieur de locaux, ou encore pour un système hybride basé sur une composante satellite et un réseau de répéteurs terrestres, est rarement de type mono-trajet, mais plutôt de type multi-trajets, du fait de réflexions et diffractions multiples. Cette propagation de signaux de type multi-trajets induit des interférences inter-trajets (c'est-à-dire une perte d'orthogonalité entre codes de canalisation) au niveau des récepteurs des terminaux utilisateurs, ce qui limite la capacité de transmission du réseau hybride. Cette perte d'orthogonalité est d'autant plus grande que le nombre d'échos et le nombre de codes de canalisation sont élevés.

Pour tenter d'améliorer la situation, au moins deux solutions ont été proposées. Une première solution consiste à répartir les codes de canalisation entre différents codes d'étalement au niveau du satellite. Cependant, cela ne permet pas de réduire réellement les interférences puisque les codes de canalisation ne sont orthogonaux entre eux que lorsqu'ils sont associés à un code d'étalement donné.

Une seconde solution consisterait à mettre en oeuvre dans les réseaux hybrides d'autres interfaces air radio proposées pour les futurs réseaux de type 3G, telle que le HSDPA (en cours de standardisation au niveau 3GPP (organisme en charge de la standardisation des réseaux 3G terrestres)). Cette seconde solution, basée sur une interface radio HSDPA permettant une adaptation dynamique du schéma de modulation/codage en fonction des conditions de propagation, elle ne peut pas être mise en oeuvre dans les réseaux hybrides de diffusion, tels que le système SDMB, du fait qu'elle requiert une voie retour (du terminal utilisateur vers le réseau) pour cette adaptation.

Aucune solution connue utilisant l'interface radio de type W-CDMA FDD supportée par les réseaux 3G n'apportant une entière satisfaction, l'invention a donc pour but d'améliorer la situation.

Elle propose à cet effet un répéteur terrestre pour un réseau de communications hybride, comportant au moins un satellite de communications chargé de transmettre à des terminaux de communication (et au(x) répéteur(s) qu'il couvre) des signaux sous la forme d'une première porteuse modulée avec des données principales à transmettre, encodées au moyen de séquences initiales d'au moins deux codes pseudo-aléatoires orthogonaux entre eux et associés chacun à un canal de transmission physique, et étalée spectralement au moyen de codes d'étalement associés chacun à une séquence.

Ce répéteur terrestre se caractérise par le fait qu'il comprend :
- des premiers moyens de traitement chargés de désétaler des signaux reçus, puis de les démoduler pour récupérer les données principales encodées qu'ils représentent, dans le but de les désencoder, et
- des seconds moyens de traitement chargés de réencoder les données principales récupérées, d'une part, avec une première partie des codes de la séquence correspondante pour constituer des premières données principales encodées, et d'autre part, avec au moins une deuxième partie des codes de la séquence correspondante, au moins complémentaire de la première partie, pour constituer au moins des deuxièmes données principales encodées, et pour générer à destination des terminaux, d'une part, des premiers signaux sous la forme de la première porteuse modulée avec les premières données principales encodées et étalée spectralement, et d'autre part, au moins des deuxièmes signaux sous la forme d'au moins une deuxième porteuse modulée avec les deuxièmes données principales encodées et étalée spectralement.

Le répéteur selon l'invention peut comporter des caractéristiques complémentaires qui peuvent être prises séparément ou en combinaison, et notamment :
- les premiers moyens de traitement peuvent être agencés de manière à recevoir des données auxiliaires destinées à être transmises aux terminaux. Dans ce cas, les seconds moyens de traitement sont chargés d'encoder les données auxiliaires avec la deuxième partie des codes de la séquence correspondante afin de constituer des deuxièmes données auxiliaires encodées destinées à moduler la deuxième porteuse,
- lorsque les séquences initiales comportent au moins des premier, deuxième et troisième codes pseudo-aléatoires, chaque première séquence peut comporter un premier code pseudo-aléatoire et un deuxième ou troisième code pseudo-aléatoire, et chaque deuxième séquence peut comporter au moins un troisième et/ou un deuxième codes pseudo-aléatoires,
- en variante, lorsque les séquences initiales comportent des première, deuxième et troisième parties de codes pseudo-aléatoires, les seconds moyens de traitement peuvent être chargés i) de réencoder les données principales récupérées, d'une première part, avec la première partie des codes de la séquence correspondante afin de constituer les premières données principales encodées, d'une deuxième part, avec la deuxième partie des codes de la séquence correspondante, afin de constituer les deuxièmes données principales encodées, et d'une troisième part, avec la troisième partie des codes de la séquence correspondante, afin de constituer des troisièmes données principales encodées, et ii) de générer à destination des terminaux, d'une part, les premiers et deuxièmes signaux, et d'autre part, des troisièmes signaux sous la forme d'une troisième porteuse modulée avec les troisièmes données principales encodées et étalée spectralement. Dans ce cas, lorsque les séquences initiales comportent au moins des premier, deuxième et troisième codes pseudo-aléatoires, chaque première séquence peut comporter un premier code pseudo-aléatoire, chaque deuxième séquence peut comporter au moins un deuxième code pseudo-aléatoire, et chaque troisième séquence peut comporter au moins un troisième code pseudo-aléatoire,
- la deuxième partie de la séquence et/ou la troisième partie de la séquence peuvent comporter au moins un code pseudo-aléatoire complémentaire,
- les seconds moyens de transmission peuvent comporter des modules de transmission de porteuse en nombre égal au nombre de porteuses différentes à transmettre et chargés respectivement de réencoder les premières et secondes données principales récupérées, ainsi que les éventuelles données auxiliaires, et de générer les premiers et deuxièmes signaux, ainsi qu'éventuellement les troisièmes signaux, compte tenu d'informations de signalisation. Dans ce cas, les premiers moyens de traitement sont par exemple chargés d'associer les informations de signalisation aux données principales et auxiliaires à transmettre, compte tenu des fréquences des porteuses qu'elles doivent moduler une fois encodées, puis de les aiguiller vers les modules de transmission de porteuse. Les seconds moyens de traitement peuvent également comprendre des amplificateurs de puissance installés respectivement en aval des modules de transmission de porteuse et chargés d'alimenter une antenne de transmission en signaux amplifiés,
- les premiers moyens de traitement peuvent comporter, d'une part, un module de réception de porteuse chargé de désétaler et démoduler les signaux reçus, et de récupérer les données principales encodées qu'ils représentent afin de les désencoder, et d'autre part, un module de traitement en bande de base alimenté en données à réencoder par le module de réception de porteuse et/ou en données auxiliaires et chargé d'associer les informations de signalisation aux données principales et auxiliaires à transmettre avant de les aiguiller vers les modules de transmission de porteuse,
- des moyens de contrôle de fonctionnement et de maintenance chargés de gérer le fonctionnement de certains au moins des moyens qui constituent le répéteur, et des moyens de contrôle de ressources radio couplés aux moyens de contrôle de fonctionnement et de maintenance et au module de traitement en bande de base et chargés de transmettre des commandes de configuration et/ou de supervision aux modules de transmission de porteuse, au module de traitement en bande de base et au module de réception de porteuse. Dans ce cas, le répéteur peut également comprendre un modem assurant le couplage entre les moyens de contrôle de fonctionnement et de maintenance et un équipement de gestion du réseau hybride,
- des moyens d'horloge chargés de délivrer des signaux d'horloge aux premiers et seconds moyens de traitement afin de permettre leur synchronisation temporelle.

Le répéteur terrestre selon l'invention peut éventuellement constituer une station de base d'un réseau de communications radio, constituant une partie du réseau hybride, sous réserve que ses moyens d'horloge soient agencés sous la forme d'un récepteur de type GNSS, délivrant une référence temporelle pour ledit réseau de communications radio, et notamment pour ses différentes stations de base.

L'invention est particulièrement bien adaptée, bien que de façon non exclusive aux réseaux hybrides utilisant une interface radio de type W-CDMA.

D'autres caractéristiques et avantages de l'invention apparaîtront à l'examen de la description détaillée ci-après, et des dessins annexés, sur lesquels.
- la figure 1 illustre de façon schématique un exemple de mise en oeuvre de l'invention entre une station satellitaire, un satellite de communications, un répéteur terrestre et un terminal de communication, et
- la figure 2 illustre de façon schématique et fonctionnelle un exemple de réalisation d'un répéteur terrestre selon l'invention.

Les dessins annexés pourront non seulement servir à compléter l'invention, mais aussi contribuer à sa définition, le cas échéant.

L'invention a pour objet de permettre la réduction des interférences inter-trajets et l'augmentation de la capacité dans un réseau de communications hybride comportant un ou plusieurs satellites de communications et un ou plusieurs répéteurs terrestres.

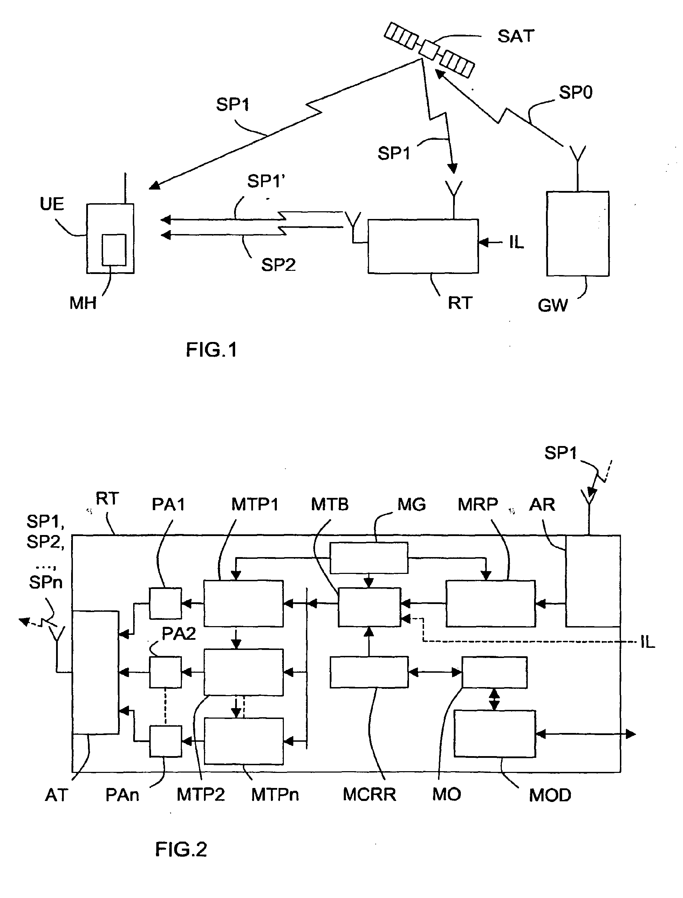

Dans ce qui suit, on considère à titre d'exemple illustratif que le réseau hybride est un réseau SDMB (pour « Satellite Digital Multimedia Broadcast ») utilisant une interface radio de type W-CDMA. Mais, l'invention n'est pas limitée à ce seul type de réseau hybride. Elle concerne en effet tous les réseaux hybrides dans lesquels la transmission de données s'effectue au moyen d'une porteuse modulée par des données encodées au moyen de séquences de codes pseudo-aléatoires orthogonaux entre eux et associés chacun à un canal de transmission physique descendant (c'est-à-dire du réseau vers des terminaux utilisateurs), et étalée spectratement au moyen de codes d'étalement associés chacun à une séquence de codes pseudo-aléatoires. Ainsi, l'invention concerne les réseaux hybrides dans lesquels on peut changer en fonction des besoins l'interface air (ou radio), par exemple pour passer d'une interface de type QPSK à une interface de type 8PSK. Cette procédure de changement d'interface air est connue sous l'acronyme anglais SDR (pour « Software Defined Radio »). Comme indiqué ci-avant et comme cela est schématiquement illustré sur la figure 1, un réseau hybride comporte au moins un satellite de communications SAT chargé de retransmettre vers un ou plusieurs répéteurs terrestres RT et vers des terminaux de communications (ou terminaux utilisateurs) UE des données qu'il reçoit d'une station de transmission satellitaire (ou « gateway ») GW du réseau.

On entend ici par « terminal de communication » tout équipement d'utilisateur, tel qu'un téléphone mobile ou fixe, ou un ordinateur fixe ou portable ou un assistant personnel numérique (ou APN) équipé de moyens de communications radio. On considère dans ce qui suit, à titre illustratif et non limitatif, que les terminaux de communication sont des téléphones mobiles.

Par ailleurs, on entend ici par « répéteur terrestre » un équipement de réseau chargé, au moins, de réceptionner les signaux (modulés et étalés) transmis par un satellite de communications SAT et de les retransmettre par voie d'ondes à destination d'équipements d'utilisateurs UE. Il est important de noter qu'un répéteur terrestre RT peut également assurer la fonction de station de base (BTS ou Node B) d'un réseau radio cellulaire, par exemple de type GSM/GPRS ou UMTS. On considère dans ce qui suit, à titre illustratif et non limitatif, que le répéteur terrestre RT n'assure pas une telle fonction de station de base. Comme indiqué précédemment, les satellites de communications SAT, d'un réseau hybride utilisant une interface radio de type W-CDMA, sont chargés de transmettre des signaux représentatifs de données destinées à des équipements d'utilisateurs UE (ici des téléphones mobiles). Ces signaux lui sont transmis par voie d'ondes (SP0) par une station satellitaire (ou gateway) GW au sol. Plus précisément, lorsque des données doivent être transmises dans un canal de transmission physique descendant, associé à un code de canalisation (ou code pseudo-aléatoire), lui-même appartenant à une séquence de codes de canalisation, orthogonaux entre-eux, associée à un code d'étalement, la station satellitaire GW commence par encoder lesdites données avec le code de canalisation. Puis, elle module une (première) porteuse de fréquence F0 avec les données encodées et étale spectralement cette porteuse modulée avec le code d'étalement associé, avant de la transmettre par voie d'ondes, au satellite SAT, sous forme de signaux dit « signaux à fréquence porteuse » SP0. A réception de ces signaux SP0, le satellite SAT transpose la fréquence F0 de la porteuse en une fréquence F1 et retransmet par voie d'ondes des signaux SP1 transposés en fréquence vers les terminaux utilisateurs UE et le ou les répéteurs terrestres RT qu'il couvre.

Le répéteur terrestre RT selon l'invention comporte tout d'abord, comme illustré sur la figure 2, une antenne de réception AR chargée de collecter les signaux à fréquence porteuse SP1 pour les délivrer à des premiers moyens de traitement comportant notamment un module de réception de porteuse MRP couplé à un module de traitement en bande de base MTB.

Le module de réception de porteuse MRP est chargé de désétaler les signaux à fréquence porteuse reçus par l'antenne de réception AR, puis de les démoduler pour récupérer les données encodées qu'ils représentent (ci-après appelées données principales), et enfin de désencoder ces données principales encodées. Il dispose pour ce faire des différents codes d'étalement et des différents codes de canalisation constituant les séquences associées aux codes d'étalement.

En d'autres termes, le module de réception de porteuse MRP est chargé de démultiplexer les canaux de transmission physique en fonction des codes associés, afin d'alimenter le module de traitement en bande de base MTB en données principales sur les différents canaux de transmission physique.

Le module de traitement en bande de base MTB est chargé d'alimenter en données à réencoder des seconds moyens de traitement MTPi du répéteur RT, sur lesquels on reviendra plus loin. Il est plus précisément chargé de réassocier des informations de signalisation aux données principales à réencoder, afin que lesdites données principales puissent être retransmises aux téléphones mobiles UE. Cette réassociation s'effectue préférentiellement par duplication des informations de signalisation associées aux données principales dans les signaux à fréquence porteuse SP1 transmis par le satellite SAT.

Il peut être également chargé, comme illustré sur la figure 2, de l'insertion locale de données auxiliaires LI dans les flux de données à transmettre aux téléphones mobiles UE. Ces données auxiliaires LI sont par exemple fournies par un équipement dédié du réseau, par voie filaire. Il s'agit par exemple de données relatives à un service particulier, éventuellement offert localement par un ou plusieurs répéteurs terrestres RT. Lorsque des données auxiliaires doivent être transmises aux téléphones mobiles UE, le module de traitement en bande de base MTB est également chargé de leur associer des informations de signalisation afin qu'elles puissent parvenir à destination.

Le fonctionnement du module de traitement en bande de base MTB, et plus précisément l'association des informations de signalisation aux données principales (par duplication) et aux données auxiliaires LI, est préférentiellement contrôlé par un module de contrôle des ressources radio MCRR du répéteur terrestre RT. Ce dernier met en oeuvre, à cet effet, des fonctions de gestion du type de celles mises en oeuvre par les contrôleurs de réseau radio (ou RNC pour « Radio Network Controller ») que comportent les réseaux cellulaires pour contrôler leurs stations de base. Parmi ces fonctions, on peut par exemple citer l'allocation et la gestion des ressources radio (codes d'étalement, codes de canalisation) vers le module de traitement en bande de base MTB.

Le module de contrôle des ressources radio MCRR est préférentiellement raccordé aux autres modules du répéteur terrestre RT ainsi qu'à un module de contrôle de fonctionnement et de maintenance MOM, de type O&M (pour « Opération and Maintenance »), afin de l'interfacer auxdits modules. Ce module de contrôle de fonctionnement et de maintenance MOM est en effet chargé de gérer le fonctionnement du répéteur terrestre RT, et plus précisément de configurer et de superviser le fonctionnement de ses différents modules, au moyen de commandes transmises via le module de contrôle des ressources radio MCRR.

Ce module de contrôle de fonctionnement et de maintenance MOM est par ailleurs couplé à un équipement de gestion du réseau (non représenté), tel qu'un centre de contrôle de fonctionnement et de maintenance, par l'intermédiaire, par exemple, d'un modem MOD. Il peut ainsi recevoir de l'équipement de gestion des instructions de configuration et/ou de supervision et lui transmettre des alarmes en cas de détection d'un problème au sein du répéteur terrestre RT. Le couplage entre le modem MOM et l'équipement de gestion peut se faire soit par voie filaire, soit par voie d'onde, par exemple au moyen d'un protocole de gestion de réseau, tel que le protocole Internet SNMP (pour « Simple Network Management Protocol »).

Le répéteur terrestre RT selon l'invention comporte des seconds moyens de traitement MTPi chargés, d'une première part, de réencoder les données principales qui ont été récupérées et réassociées aux informations de signalisation initiales par le module de traitement en bande de base MTB, et éventuellement d'encoder les données auxiliaires qui ont été communiquées audit module de traitement en bande de base MTB et associées aux informations de signalisation correspondantes par ce dernier, d'une deuxième part, d'utiliser les données principales réencodées (et les éventuelles données auxiliaires encodées) pour moduler au moins deux porteuses de fréquences différentes, dont la première fréquence F1, et d'une troisième part, pour étaler spectralement ces porteuses de fréquences différentes.

Les données principales, précédemment encodées par le satellite SAT au moyen d'une première partie des codes de canalisation d'une séquence donnée associée à un code d'étalement donné et multiplexées à d'autres données principales par ledit satellite SAT au moyen d'une seconde partie des codes de canalisation de cette même séquence donnée, complémentaire de la première, sont réencodées au moyen de cette même première partie des codes de canalisation afin de former des premières données principales encodées. Les autres données principales sont, quant à elles, réencodées au moyen d'au moins la seconde partie des codes de canalisation afin de former des secondes données principales encodées.

Les premières données principales encodées sont ensuite utilisées pour moduler la première porteuse, présentant la première fréquence F1, puis cette première porteuse modulée est étalée spectralement au moyen du code d'étalement associé à la première partie de codes de canalisation correspondante. De même, les secondes données principales encodées sont utilisées pour moduler la seconde porteuse, présentant une seconde fréquence F2, puis cette seconde porteuse modulée est étalée spectralement au moyen du même code d'étalement (également associé à la seconde partie de codes de canalisation correspondante).

Par exemple, lorsqu'une séquence, initialement utilisée par le satellite SAT avec un code d'étalement donné, comporte trois codes de canalisation C1, C2 et C3 (par exemple associés à trois canaux de transmission physique autorisant des débits de 384 kb/s), la première partie de la séquence peut être constituée du premier code C1 et du deuxième code C2 (ou en variante du premier code C1 et du troisième code C3), tandis que la seconde partie de la séquence peut être constituée du troisième code C3 (ou en variante du deuxième code C2) ainsi qu'éventuellement d'au moins un code de canalisation complémentaire (C4) également associé au code d'étalement donné.

Dans ce cas, les premières données principales encodées résultent de l'encodage de données principales au moyen du premier code C1 et du deuxième code C2 (ou en variante du premier code C1 et du troisième code C3), et les secondes données principales encodées résultent de l'encodage de données principales au moyen du troisième code C3 (ou en variante du deuxième code C2) ainsi qu'éventuellement d'au moins un code de canalisation complémentaire (C4). L'étalement spectral s'effectue ensuite, après la phase de modulation, au moyen d'un code d'étalement (identique ou différent) pour les deux porteuses de fréquences différentes F1 et F2.

Il est important de noter que l'on peut utiliser plus de deux porteuses de fréquences différentes, dont la première (et initiale) F1. Par exemple, on peut utiliser trois porteuses présentant trois fréquences différentes F1, F2 et F3, voire plus encore, modulées au moyen de premières, deuxièmes et d'au moins troisièmes données encodées.

Par exemple, lorsqu'une séquence, initialement utilisée par le satellite SAT avec un code d'étalement donné, comporte trois codes de canalisation C1, C2 et C3, et que le répéteur terrestre RT est adapté pour transmettre des premiers, deuxièmes et troisièmes signaux sous la forme de première, deuxième et troisième porteuses présentant de première F1, deuxième F2 et troisième F3 fréquences, la première partie de la séquence peut être constituée du premier code C1, la deuxième partie de la séquence peut être constituée du deuxième code C2 ainsi qu'éventuellement d'au moins un code de canalisation complémentaire (C4) également associé au code d'étalement donné, et la troisième partie de la séquence peut être constituée du troisième code C3 ainsi qu'éventuellement d'au moins un code de canalisation complémentaire (C5 et/ou C4) également associé audit code d'étalement donné.

Dans ce cas, les premières données principales encodées résultent de l'encodage de données principales au moyen du premier code C1, les secondes données principales encodées résultent de l'encodage de données principales au moyen du deuxième code C2 (ainsi qu'éventuellement d'au moins un code de canalisation complémentaire (C4)), et les troisièmes données principales encodées résultent de l'encodage de données principales au moyen du troisième code C3 (ainsi qu'éventuellement d'au moins un code de canalisation complémentaire (C5 et/ou C4)). L'étalement spectral s'effectue ensuite, après la phase de modulation, au moyen d'un code d'étalement (identique ou différent) pour les trois porteuses de fréquences différentes F1, F2 et F3.

Les fréquences utilisées, autres que la première fréquence F1 déjà utilisée par le satellite SAT, sont préférentiellement des fréquences utilisées par le même satellite SAT ou par d'autres satellites du même réseau hybride pour transmettre des signaux de fréquence porteuse dans d'autres zones (ou « spots ») rattachées à d'autres répéteurs terrestres RT. Mais cela n'est pas une obligation.

Lorsque le module de traitement en bande de base MTB reçoit des données auxiliaires IL, il leur associe des informations de signalisation et les communique ensemble aux seconds moyens de traitement MTPi. Ces données auxiliaires sont préférentiellement encodées avec la deuxième (ou la troisième, ou plus généralement une n-ième (n≠1)) partie des codes de canalisation de la: séquence, et/ou avec un code de canalisation complémentaire, qui est associé(e) au code d'étalement utilisé pour étaler spectralement la n-ième porteuse qu'elles modulent.

Il est important de noter qu'une n-ième (n≠1) partie ne comporte pas forcément une partie au moins des codes de canalisation d'une séquence initialement utilisée. La seule condition devant être respectée par cette n-ième partie étant son association au code d'étalement utilisé pour étaler spectralement la n-ième porteuse modulée par les n-ièmes données qu'elles encodent.

Afin de mettre en oeuvre le réencodage des données principales (et l'éventuel encodage des données auxiliaires), les seconds moyens de traitement comportent préférentiellement autant de modules de transmission de porteuse MTPi qu'il y a de porteuses de fréquences différentes à transmettre aux téléphones mobiles UE. Par exemple, en présence de deux porteuses de fréquences respectives F1 et F2 on utilise deux modules de transmission de porteuse MTP1 et MTP2, tandis qu'en présence de trois porteuses de fréquences respectives F1, F2 et F3 on utilise trois modules de transmission de porteuse MTP1, MTP2 et MTP3. En d'autres termes, en présence de n porteuses de fréquences respectives F1, F2, ..., Fn on utilise n modules de transmission de porteuse MTP1, MTP2, ..., MTPn.

Chaque module de transmission de porteuse MTPi est donc tout d'abord chargé soit de réencoder les i-èmes données principales récupérées (et les informations de signalisation associées) avec la i-ème partie de la séquence initialement utilisée par le satellite SAT pour les encoder, soit d'encoder les éventuelles données auxiliaires (et les informations de signalisation associées) avec la i-ème partie de la séquence initialement utilisée par le satellite SAT pour les encoder (ou avec au moins un code complémentaire). Ensuite, chaque module de transmission de porteuse MTPi module la i-ème porteuse de fréquence Fi avec les i-èmes données encodées, puis il étale spectralement cette porteuse avec le code d'étalement associé à la i-ème partie de code utilisée. Cette i-ème porteuse est alors communiquée à une antenne de transmission AT afin qu'elle la transmette par voie d'ondes sous la forme de i-ièmes signaux SPi (SP1', SP2,..., SPn) à destination des téléphones mobiles UE.

Préférentiellement, et comme illustré sur la figure 2, on prévoit un amplificateur de puissance PAi en aval de chaque module de transmission de porteuse MTPi et en amont de l'antenne de transmission AT, afin d'obtenir le niveau de sortie nécessaire à la couverture radio attendue.

Le module de traitement en bande de base MTB est couplé à chaque module de transmission de porteuse MTPi par l'intermédiaire d'un bus, par exemple. Il est donc également chargé d'aiguiller les données principales et auxiliaires (et les informations de signalisation associées), qui empruntent (ou doivent emprunter) un canal de transmission physique, vers le module de transmission de porteuse MTPi qui est en charge du (ré-)encodage au moyen du code de canalisation correspondant à ce canal de transmission physique.

Par ailleurs, le répéteur terrestre RT comporte préférentiellement des moyens d'horloge MG chargés de délivrer des signaux d'horloge identiques au moins au module de réception de porteuse MRP et à chacun des modules de transmission de porteuse MTPi, ainsi qu'au module de traitement en bande de base MTB afin de lui fournir une référence temporelle choisie.

Ces moyens d'horloge MG sont préférentiellement réalisés sous la forme d'un récepteur GNSS alimenté en signaux définissant le référentiel temporel d'un réseau de positionnement par satellites (ou réseau GNSS), comme par exemple un réseau GPS (pour « Global Positioning System »). On peut noter que les signaux définissant le référentiel temporel ne proviennent pas forcément directement des satellites du réseau GNSS ; ils peuvent en effet provenir de relais terrestres.

Le module de réception de porteuse MRP, les modules de transmission de porteuse MTPi, le module de traitement en bande de base MTB, le module de contrôle de ressources radio MCRR et le module de contrôle de fonctionnement et de maintenance MOM, peuvent être réalisés sous la forme de circuits électroniques, de modules logiciels (ou informatiques), ou d'une combinaison de circuits et de logiciels.

Grâce à l'invention, ni les équipements d'utilisateurs UE ni les satellites de communications SAT du réseau hybride n'ont besoin d'être modifiés.

En présence de l'invention, les équipements d'utilisateurs UE peuvent continuer à mettre en oeuvre des fonctions de transfert de communication entre cellules (ou « handovers »).

Plus précisément, pour les codes de canalisation de la première partie, utilisés à la fois par la porteuse SP1 du satellite SAT et par la porteuse SP1' du répéteur terrestre RT, qui présentent la même première fréquence F1, les équipements d'utilisateurs UE effectuent des procédures de handover dit « soft » ou « softer » sur les données principales encodées avec les codes de canalisation de la première partie de codes (par exemple C1 et C2) au moyen de leur récepteur dit « de Rake » en utilisant une technique de combinaison de ratio maximum, par exemple.

Pour les codes de canalisation des autres parties de codes, utilisés seulement par la (ou les) porteuse(s) SPn (n≠1) du répéteur terrestre RT présentant une (des) fréquence(s) Fn différente(s) de la première fréquence F1, les équipements d'utilisateurs UE effectuent des procédures de handover dit « hard » à la fois sur les données principales encodées au moyen des codes de canalisation des n-ièmes parties de codes (par exemple C3 et C4) et sur les données principales encodées au moyen des codes de canalisation de la première partie de codes (par exemple C1 et C2). Ces hard handovers sont notamment définis dans les spécifications du 3GPP (3GPP 25.303, section 647, et 3GPP 25.331, section 835).

Pour les données auxiliaires LI, les équipements d'utilisateurs UE effectuent des procédures de soft ou softer handover intra cellule et inter-cellules auprès des répéteurs terrestres RT qui les délivrent en parallèle.

Grâce à l'invention les capacités de diffusion (ou « broadcasting ») du réseau hybride peuvent être notablement améliorées. En outre, l'invention permet d'offrir une flexibilité en terme d'allocation des ressources radio. Elle permet également d'insérer des données auxiliaires, dédiées à des services locaux spécifiques.

L'invention ne se limite pas aux modes de réalisation de répéteur terrestre décrits ci-avant, seulement à titre d'exemple, mais elle englobe toutes les variantes que pourra envisager l'homme de l'art dans le cadre des revendications ci-après.

## Revendications

1. Répéteur terrestre (RT) pour un réseau de communications hybride, comportant au moins un satellite de communications (SAT) propre à transmettre à des terminaux de communication (UE) et au moins audit répéteur des signaux sous la forme d'une première porteuse modulée avec des données principales à transmettre, encodées au moyen de séquences initiales d'au moins deux codes pseudo-aléatoires orthogonaux entre eux et associés chacun à un canal de transmission physique, et étalée spectralement au moyen de codes d'étalement associés chacun à une séquence, **caractérisé en ce qu'**il comprend i) des premiers moyens de traitement (MRP, MTB) agencés, à réception desdits signaux, pour les désétaler et les démoduler de manière à récupérer les données principales encodées qu'ils représentent afin de les désencoder, et ii) des seconds moyens de traitement (MTPi, PAi) agencés pour réencoder lesdites données principales récupérées, d'une part, avec une première partie des codes de ladite séquence correspondante pour constituer des premières données principales encodées, et d'autre part, avec au moins une deuxième partie des codes de ladite séquence correspondante, au moins complémentaire de ladite première partie, pour constituer au moins des deuxièmes données principales encodées, et pour générer à destination desdits terminaux (UE), d'une part, des premiers signaux sous la forme de ladite première porteuse modulée avec lesdites premières données principales encodées et étalée spectralement, et d'autre part, au moins des deuxièmes signaux sous la forme d'au moins une deuxième porteuse modulée avec lesdites deuxièmes données principales encodées et étalée spectralement.

2. Répéteur selon la revendication 1, **caractérisé en ce que** lesdits premiers moyens de traitement (MRP, MTB) sont agencés pour recevoir des données auxiliaires (LI) destinées à être transmises auxdits terminaux (UE), et **en ce que** lesdits seconds moyens de traitement (MTPi, PAi) sont agencés pour encoder lesdites données auxiliaires (LI) avec ladite deuxième partie des codes de ladite séquence correspondante pour constituer des deuxièmes données auxiliaires encodées destinées à moduler ladite deuxième porteuse.

3. Répéteur selon l'une des revendications 1 et 2, **caractérisé en ce que** lesdites séquences initiales comportant au moins des premier, deuxième et troisième codes pseudo-aléatoires, chaque première séquence comporte un premier code pseudo-aléatoire et un deuxième ou troisième code pseudo-aléatoire, et chaque deuxième séquence comporte au moins un troisième ou un deuxième code pseudo-aléatoire.

4. Répéteur selon l'une des revendications 1 et 2, **caractérisé en ce que** lesdites séquences initiales comportant des première, deuxième et troisième parties de codes pseudo-aléatoires, lesdits seconds moyens de traitement (MTPi, PAi) sont agencés pour réencoder lesdites données principales récupérées, d'une première part, avec ladite première partie des codes de ladite séquence correspondante pour constituer lesdites premières données principales encodées, d'une deuxième part, avec ladite deuxième partie des codes de ladite séquence correspondante, pour constituer lesdites deuxièmes données principales encodées, et d'une troisième part, avec ladite troisième partie des codes de ladite séquence correspondante, pour constituer des troisièmes données principales encodées, et pour générer à destination desdits terminaux (UE), d'une part, lesdits premiers et deuxièmes signaux, et d'autre part, des troisièmes signaux sous la forme d'une troisième porteuse modulée avec lesdites troisièmes données principales encodées et étalée spectralement.

5. Répéteur selon la revendication 4, **caractérisé en ce que** lesdites séquences initiales comportant au moins des premier, deuxième et troisième codes pseudo-aléatoires, chaque première séquence comporte un premier code pseudo-aléatoire, chaque deuxième séquence comporte au moins un deuxième code pseudo-aléatoire, et chaque troisième séquence comporte au moins un troisième code pseudo-aléatoire.

6. Répéteur selon l'une des revendications 1 à 5, **caractérisé en ce que** ladite deuxième partie de la séquence et/ou ladite troisième partie de la séquence comporte(nt) au moins un code pseudo-aléatoire complémentaire.

7. Répéteur selon l'une des revendications 1 à 6, **caractérisé en ce que** lesdits seconds moyens de transmission (MTPi, Pai) comportent des modules de transmission de porteuse (MTPi) en nombre égal au nombre de porteuses différentes à transmettre et chargés respectivement de réencoder les premières et secondes données principales récupérées, ainsi que les éventuelles données auxiliaires, et de générer lesdits premiers et deuxièmes signaux, ainsi qu'éventuellement lesdits troisièmes signaux, compte tenu d'informations de signalisation, et **en ce que** lesdits premiers moyens de traitement (MRP, MTB) sont agencés pour associer lesdites informations de signalisation aux données principales et auxiliaires à transmettre, compte tenu des fréquences des porteuses qu'elles doivent moduler une fois encodées, puis pour les aiguiller vers lesdits modules de transmission de porteuse correspondants (MTPi).

8. Répéteur selon la revendication 7, **caractérisé en ce que** lesdits seconds moyens de traitement (MTPi, PAi) comprennent des amplificateurs de puissance (PAi) installés respectivement en aval desdits modules de transmission de porteuse (MTPi) et alimentant une antenne de transmission (AT).

9. Répéteur selon l'une des revendications 7 et 8, **caractérisé en ce que** lesdits premiers moyens de traitement (MRP, MTB) comportent un module de réception de porteuse (MRP) agencé pour désétaler et démoduler lesdits signaux reçus, et récupérer lesdites données principales encodées qu'ils représentent afin de les désencoder, et un module de traitement en bande de base (MTB) alimenté en données à réencoder par ledit module de réception de porteuse et/ou en données auxiliaires et agencé pour associer lesdites informations de signalisation aux données principales et auxiliaires à transmettre avant de les aiguiller vers lesdits modules de transmission de porteuse correspondants (MTPi).

10. Répéteur selon la revendication 9, **caractérisé en ce qu'**il comprend des moyens de contrôle de fonctionnement et de maintenance (MOM) agencés pour gérer le fonctionnement de certains au moins des moyens qui le constituent, et des moyens de contrôle de ressources radio (MCRR) couplés auxdits moyens de contrôle de fonctionnement et de maintenance (MOM) et audit module de traitement en bande de base (MTB) et agencés pour transmettre des commandes de configuration et/ou de supervision auxdits modules de transmission de porteuse (MTPi), audit module de traitement en bande de base (MTB) et audit module de réception de porteuse (MRP).

11. Répéteur selon la revendication 10, **caractérisé en ce qu'**il comprend un modem (MOD) assurant le couplage entre lesdits moyens de contrôle de fonctionnement et de maintenance (MOM) et un équipement de gestion dudit réseau hybride.

12. Répéteur selon l'une des revendications 1 à 11, **caractérisé en ce qu'**il comprend des moyens d'horloge (MG) agencés pour délivrer des signaux d'horloge auxdits premiers moyens de traitement (MRP, MTB) et à une partie au moins desdits seconds moyens de traitement (MTPi) en vue de les synchroniser temporellement.

13. Répéteur selon l'une des revendications 1 à 12, **caractérisé en ce qu'**il constitue une station de base d'un réseau de communications radio constituant une partie dudit réseau hybride.

## Claims

1. A terrestrial repeater (RT) for a hybrid communications network, comprising at least one communications satellite (SAT) capable of transmitting signals to communication terminals (UE), and to at least said repeater, in the form of a first carrier modulated with main data to be transmitted encoded by means of initial sequences of at least two pseudorandom codes orthogonal to one another and each associated with a physical transmission channel, said first carrier being spectrally spread by means of spreading codes each associated with a sequence, **characterized in that** it comprises i) first processing means (MRP, MTB) adapted, upon receiving said signals, for de-spreading them and demodulating them so as to retrieve the main encoded data that they represent in order to decode them, and ii) second processing means (MTPi, PAi) adapted for re-encoding said retrieved main data, both with a first portion of the codes of said corresponding sequence in order to constitute first encoded main data, and with at least one second portion of the codes of said corresponding sequence, which is at least complementary to said first portion, in order to constitute at least second encoded main data, and for generating towards said terminals (UE), both first signals in the form of said first carrier modulated with said first encoded, spread-spectrum main data, and at least second signals in the form of at least one second carrier modulated with said second encoded, spread-spectrum main data.

2. A repeater according to claim 1, **characterized in that** said first processing means (MRP, MTB) are adapted for receiving auxiliary data (LI) intended to be transmitted to said terminals (UE), and **in that** said second processing means (MTPi, PAi) are adapted for encoding said auxiliary data (LI) with said second portion of codes of said corresponding sequence in order to constitute second encoded auxiliary data intended to modulate said second carrier.

3. A repeater according to one of the claims 1 and 2, **characterized in that** said initial sequences comprising at least first, second, and third pseudorandom codes, each first sequence comprises a first pseudorandom code and a second or third pseudorandom code, and each second sequence comprises at least a third or a second pseudorandom code.

4. A repeater according to one of the claims 1 and 2, **characterized in that** said initial sequences comprising first, second, and third portions of pseudorandom codes, said second processing means (MTPi, PAi) are adapted for re-encoding said retrieved main data, firstly with said first portion of the codes of said corresponding sequence in order to constitute said first encoded main data, and secondly with said second portion of the codes of said corresponding sequence, in order to constitute said second encoded main data, and thirdly, with said third portion of the codes of said corresponding sequence, in order to constitute third encoded main data, and to generate, towards said terminals (UE), first and second signals, as well as third signals in the form of a third carrier modulated with said third encoded, spread-spectrum main data.

5. A repeater according to claim 4, **characterized in that**, said initial sequences comprising at least first, second, and third pseudorandom codes, each first sequence comprises one first pseudorandom code, each second sequence comprises at least one second pseudorandom code, and each third sequence comprises at least one third pseudorandom code.

6. A repeater according to one of the claims 1 to 5, **characterized in that** said second portion of the sequence and/or said third portion of the sequence comprise(s) at least one complementary pseudorandom code.

7. A repeater according to one of the claims 1 to 6, **characterized in that** said second transmission means (MTPi, PAi) comprise carrier transmission modules (MTPi) whose number is equal to the number of different carriers to be transmitted, respectively tasked with re-encoding the retrieved first and second main data, as well as auxiliary data if any, and with generating said first and second signals, and potentially said third signals, taking signaling information into account, and **in that** said first processing means (MRP, MTB) are adapted for associating said signaling information with the main and auxiliary data to be transmitted, taking into account the frequencies of the carriers that they must modulate once encoded, then for routing them to said corresponding carrier transmission modules (MTPi).

8. A repeater according to claim 7, **characterized in that** said second processing means (MTPi, PAi) comprise power amplifiers (Pi) respectively installed downstream of said carrier transmission modules (MTPi) and supplying at least one transmission antenna (AT).

9. A repeater according to one of the claims 7 and 8, **characterized in that** said second processing means (MRP, MTB) comprise a carrier reception module (MRP) adapted for de-spreading and demodulating said received signals, and for retrieving said encoded main data that they represent in order to decode them, and one baseband processing module (MTB) supplied with data for said carrier reception module to reencode and/or with auxiliary data and adapted for associating said signaling information with the main and auxiliary data to be transmitted before routing them to said corresponding carrier transmission modules (MTPi).

10. A repeater according to claim 9, **characterized in that** it comprises operation- and maintenance-controlling means (MOM) adapted for managing the operation of at least some of the means that constitute it, and radio resource-controlling means (MCRR) coupled with said operation- and maintenance-controlling means (MOM) and with said baseband processing module (MTB) and adapted for transmitting configuration and/or monitoring commands to said carrier transmission modules (MTPi), to said baseband processing module (MTB) and to said carrier reception module (MRP).

11. A repeater according to claim 10, **characterized in that** it comprises a modem (MOD) ensuring the coupling between said operation- and maintenance-controlling means (MOM) and a management device of said hybrid network.

12. A repeater according to one of the claims 1 to 11, **characterized in that** it comprises clock means (MG) adapted for delivering clock signals to said first processing means (MRP, MTB) and at least one portion of said second processing means (MTPi) in view of time-synchronizing them.

13. A repeater according to one of the claims 1 to 12, **characterized in that** it constitutes a base station of a radio communication network constituting a portion of said hybrid network.

## Patentansprüche

1. Terrestrischer Repeater (RT) für ein hybrides Kommunikationsnetzwerk mit mindestens einem Kommunikationssatelliten (SAT), welcher dazu ausgelegt ist, Signale in der Form einer ersten Trägerfrequenz, die mit zu übertragenden Hauptdaten, welche anhand von ursprünglichen Sequenzen mit mindestens zwei zueinander orthogonalen und jeweils mit einem physischen Übertragungskanal assoziierten Pseudo-Zufallscodes codiert sind, moduliert und anhand von jeweils mit einer Sequenz assoziierten Spreizcodes spektral gespreizt ist, an Kommunikationsendgeräte (UE) und an mindestens den besagten Repeater zu übertragen, **dadurch gekennzeichnet, dass** er umfasst: i) erste Verarbeitungsmittel (MRP, MTB), die dazu ausgelegt sind, bei Empfang der besagten Signale diese zu entspreizen und zu demodulieren, um die von den Signalen dargestellten codierten Hauptdaten rückzugewinnen, um sie zu decodieren, und ii) zweite Verarbeitungsmittel (MTPi, PAi), die dazu ausgelegt sind, die besagten rückgewonnenen Hauptdaten neu zu codieren, und zwar einerseits mit einem ersten Abschnitt der Codes der besagten entsprechenden Sequenz, um erste codierte Hauptdaten zu bilden, und andererseits mit mindestens einem zweiten Abschnitt der Codes der besagten entsprechenden Sequenz, welcher mindestens komplementär zu dem besagten ersten Abschnitt ist, um mindestens zweite codierte Hauptdaten zu bilden, und weiterhin dazu ausgelegt sind, für die besagten Endgeräte (UE) bestimmte erste Signale in der Form der besagten mit den besagten ersten codierten Hauptdaten modulierten und spektral gespreizten ersten Trägerfrequenz, einerseits, und mindestens zweite Signale in der Form zumindest einer zweiten mit den besagten zweiten codierten Hauptdaten modulierten und spektral gespreitzten zweiten Trägerfrequenz, andererseits, zu erzeugen.

2. Repeater nach Anspruch 1, **dadurch gekennzeichnet, dass** die besagten ersten Verarbeitungsmittel (MRP, MTB) für den Empfang der für die Übertragung an die besagten Endgeräte (UE) bestimmten Hilfsdaten (LI) ausgelegt sind, und dass die besagten zweiten Verarbeitungsmittel (MTPi, PAi) für die Codierung der besagten Hilfsdaten (LI) mit dem besagten zweiten Abschnitt der Codes der besagten entsprechenden Sequenz ausgelegt sind, um codierte zweite Hilfsdaten zu bilden, die für die Modulation der besagten zweiten Trägerfrequenz bestimmt sind..

3. Repeater nach einem der Ansprüche 1 und 2, **dadurch gekennzeichnet, dass** die besagten ursprünglichen Sequenzen mindestens einen ersten, einen zweiten und einen dritten Pseudo-Zufallscode enthalten, wobei jede erste Sequenz einen ersten Pseudo-Zufallscode und einen zweiten oder dritten Pseudo-Zufallscode enthält, und jede zweite Sequenz mindestens einen dritten oder einen zweiten Pseudo-Zufallscode enthält.

4. Repeater nach einem der Ansprüche 1 und 2, **dadurch gekennzeichnet, dass** die besagten ursprünglichen Sequenzen einen ersten, einen zweiten und einen dritten Abschnitt von Pseudo-Zufallscodes umfassen, wobei die besagten zweiten Verarbeitungsmittel (MTPi, PAi) dazu ausgelegt sind, die besagten rückgewonnenen Hauptdaten erneut zu codieren, und zwar erstens mit dem besagten ersten Abschnitt der Codes der besagten entsprechenden Sequenzen, um die besagten ersten codierten Hauptdaten zu bilden, zweitens mit dem besagten zweiten Abschnitt der Codes der besagten entsprechenden Sequenz, um die besagten zweiten codierten Hauptdaten zu bilden, und drittens mit dem besagten dritten Abschnitt der Codes der besagten entsprechenden Sequenz, um dritte codierte Hauptdaten zu bilden, und weiterhin dazu ausgelegt sind, die besagten für die besagten Endgeräte (UE) bestimmten ersten und zweiten Signale, einerseits, und dritte Signale in der Form einer dritten, mit den besagten dritten codierten Hauptdaten modulierten und spektral gespreizten Trägerfrequenz, andererseits, zu erzeugen.

5. Repeater nach Anspruch 4, **dadurch gekennzeichnet, dass** die besagten ursprünglichen Sequenzen mindestens erste, zweite und dritte Pseudo-Zufallscodes enthalten, wobei jede erste Sequenz einen ersten Pseudo-Zufallscode enthält, jede zweite Sequenz mindestens einen zweiten Pseudo-Zufallscode enthält, und jede dritte Sequenz mindestens einen dritten Pseudo-Zufallscode enthält.

6. Repeater nach einem der Ansprüche 1 bis 5, **dadurch gekennzeichnet, dass** der besagte zweite Abschnitt der Sequenz und/oder der besagte dritte Abschnitt der Sequenz mindesten einen zusätzlichen Pseudo-Zufallscode enthält/enthalten.

7. Repeater nach einem der Ansprüche 1 bis 6, **dadurch gekennzeichnet, dass** die besagten zweiten Übertragungsmittel (MTPi, PAi) Trägerfrequenzübertragungsmodule (MTPi) in einer Anzahl, welche der Anzahl der verschiedenen zu übertragenden Trägerfrequenzen entspricht, umfassen, welche jeweils die Aufgabe haben, die rückgewonnenen ersten und zweiten Hauptdaten sowie die eventuellen Hilfsdaten neu zu codieren und die besagten ersten und zweiten Signale sowie gegebenenfalls die besagten dritten Signale unter Berücksichtigung von Signalisierungsinformationen zu erzeugen, und dass die besagten ersten Verarbeitungsmittel (MRP, MTB) dazu ausgelegt sind, die besagten Signalisierungsinformationen mit den zu übertragenden Haupt- und Hilfsdaten unter Berücksichtigung der Frequenzen der Trägerfrequenzen, die sie nach der Codierung modulieren sollen, zu assoziieren und diese anschließend an die besagten entsprechenden Trägerfrequenzübertragungsmodule (MTPi) zu leiten.

8. Repeater nach Anspruch 7, **dadurch gekennzeichnet, dass** die besagten zweiten Verarbeitungsmittel (MTPi, PAi) Leistungsverstärker (Pi) umfassen, welche jeweils den besagten Trägerfrequenzübertragungsmodulen (MTPi) nachgeschaltet sind und eine Übertragungsantenne (AT) versorgen.

9. Repeater nach einem der Ansprüche 7 und 8, **dadurch gekennzeichnet, dass** die besagten Verarbeitungsmittel (MRP, MTB) ein Trägerfrequenzempfangsmodul (MRP), welches dazu ausgelegt ist, die besagten empfangenen Signale zu entspreizen und zu demodulieren und die besagten codierten Hauptdaten, die sie darstellen, rückzugewinnen, um sie zu decodieren, und ein Modul für die Verarbeitung im Basisband (MTB), welches mit von dem besagten Trägerfrequenzempfangsmodul neu zu codierenden Daten und/oder mit Hilfsdaten versorgt wird und dazu ausgelegt ist, die besagten Signalisierungsinformation mit den zu übertragenden Haupt- und Hilfsdaten zu assoziieren, bevor sie an die besagten entsprechenden Trägerfrequenzübertragungsmodule (MTPi) geleitet werden, umfassen.

10. Repeater nach Anspruch 9, **dadurch gekennzeichnet, dass** er Betriebs- und Wartungssteuerungsmittel (MOM), welche dazu ausgelegt sind, den Betrieb zumindest einiger der Mittel, aus denen er besteht, zu verwalten, und Funkressourcensteuerungsmittel (MCRR), welche an die besagten Betriebs- und Wartungssteuerungsmittel (MOM) und an das besagte Modul für die Verarbeitung im Basisband (MTB) gekoppelt und dazu ausgelegt sind, Konfigurations- und/oder Überwachungsbefehle an die besagten Trägerfrequenzübertragungsmodule (MTPi), an das besagte Modul für die Verarbeitung im Basisband (MTB) und an das besagte Trägerfrequenzempfangsmodul (MRP) zu übertragen, umfasst.

11. Repeater nach Anspruch 10, **dadurch gekennzeichnet, dass** er ein Modem (MOD) umfasst, welches die Kopplung zwischen den besagten Betriebs- und Wartungssteuerungsmitteln (MOM) und einer Verwaltungsvorrichtung des besagten hybriden Netzwerks gewährleistet.

12. Repeater nach einem der Ansprüche 1 bis 11, **dadurch gekennzeichnet, dass** er Zeitgebermittel (MG) umfasst, welche dazu ausgelegt sind, Taktsignale an die besagten ersten Verarbeitungsmittel (MRP, MTB) und zumindest an einen Teil der besagten zweiten Verarbeitungsmittel (MTPi) zwecks einer zeitlichen Synchronisierung auszugeben.

13. Repeater nach einem der Ansprüche 1 bis 12, **dadurch gekennzeichnet, dass** er eine Basisstation eines Funkkommunikationsnetzwerks, welches Bestandteil des besagten hybriden Netzwerks ist, bildet.
